# EUROPEAN PATENT SPECIFICATION

(11) **EP 1 567 748 B1**
(45) Date of publication and mention of the grant of the patent: **08.11.2006**
(21) Application number: 03780323.6
(22) Date of filing: 02.12.2003
(51) Int. Cl.: F01C 1/02, F01C 1/16

(54) **ELECTRICAL POWER SUPPLY SYSTEM**
STROMVERSORGUNGSSYSTEM
SYSTEME D'ALIMENTATION ELECTRIQUE

(30) Priority: 07.12.2002 GB 0228599; 29.04.2003 GB 0309834
(43) Date of publication of application: 31.08.2005
(73) Proprietor: Energetix Group Limited, Capenhurst, Chenshire CH1 6EH (GB)
(72) Inventor: JUBY, Lee, Cheshire WA6 0DA (GB); BENSTEAD, Russell, Cheshire CH66 4TX (GB); REDFORD, Simon, Cheshire CH3 5TE (GB)
(74) Representative: Harrison Goddard Foote
(86) International application number: PCT/GB2003/005230
(87) International publication number: WO 2004/053295

(56) References cited:
- WO-A-02/090747
- GB-A- 2 342 955
- US-A- 4 281 256
- US-A- 6 142 755
- US-A1- 2001 043 878
- US-B1- 6 276 123

## Description

This invention concerns a system for generating back-up electrical power thus to provide an uninterruptible power supply for installations such as computers and communications systems.

Conventionally, back-up power has been supplied by stand-by generators operated using fossil fuels and often started by a battery. Batteries used to start stand-by generators or to store energy to provide uninterruptible power supplies have a limited life and present a significant maintenance burden. In hot climates, the problems are compounded by a further reduction in battery life and a requirement for energy not only to keep electronic control systems operational but also to keep them cool through air conditioning.

US patent 4 281 256 describes a compressed air energy storage system having an internal combustion reciprocating engine operable as a compressor during slack demand periods to charge a storage vessel, and as an expander driven by compressed air from the vessel during peak periods.

An object of the present invention is to provide a system for generating back-up electrical power while also producing a cool environment for maintaining systems at a cool operating temperature. Such a generating system will operate without the use of fossil fuels and without reliance upon batteries.

According to the present invention there is provided a system for generating back-up electrical power, comprising a vessel adapted to contain a volume of compressed gas; a valve to release gas from the vessel at a predetermined pressure; an expander adapted to receive and pass said released gas passed by the expander; and an electrical generator drivingly connected to the rotary member of the expander thus to generate a supply of electrical power; characterised in that the expander is a scroll expander.

Energy is contained within the gas stored in the vessel at a pressure in the region of 300 bar. The compressed gas energy stored does not degrade with ambient temperature and so has the potential to provide a reliable energy reserve with a long working life. Mechanical energy can thus be recovered when the compressed gas is allowed to expand, and the mechanical energy can be converted to electrical energy using a generator. This system will operate such that when electrical power is required the compressed gas is discharged from the vessel through a regulator to provide an air flow at a reduced pressure in the region of 10 bar. The gas is then supplied to the scroll expander which is mechanically rotated by the passage of the gas therethrough and which then mechanically rotates the electrical generator connected to the shaft of the scroll expander to provide the necessary electrical power.

Embodiments of the invention will be described, by way of example only, with reference to the accompanying drawings, in which:-
Fig. 1 is a block diagram of the principal components of the system for generating back-up electrical power; in accordance with a first embodiment;
Fig. 2 is a similar diagram of the components of a second embodiment;
Fig. 3 illustrates a control algorithm; and
Fig. 4 illustrates the components of a system for recovery of energy from the systems of Figs. 1 and 2.

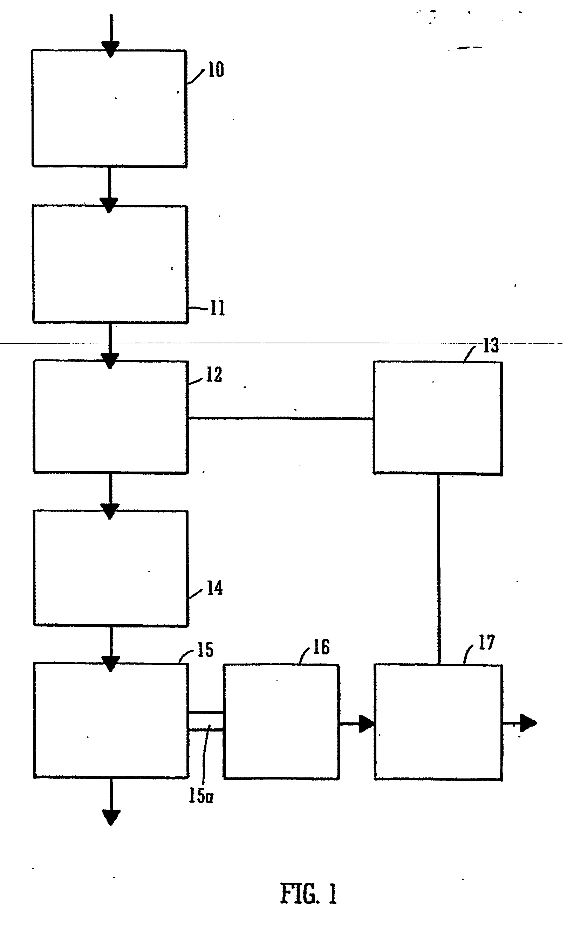

The system of Fig. 1 comprises a multi-stage air compressor and drier 10 adapted to charge a pressure vessel 11 containing, for example, 300 litres of dried and compressed air, the energy equivalent of which is in the region of 11 kW hours. The dry air is stored at a due point of -30°C. Dry air is important to prevent corrosion of the vessel 11 if made of steel, and to prevent icing when the air is expanded. The establishment of such high pressure air in the region of 300 bar enables a considerable density of energy storage for a relatively small volume. The compressor 10 will be driven from the utility electrical supply.

Compressing air to such a high pressure generates considerable low grade heat which may be exhausted from the compressor or utilised in some other application. The vessel 11 may be of steel construction similar to such vessels used to store industrial process gases. Alternatively, the vessel may be of carbon fibre such as those used to contain compressed natural gas in the automotive industry.

Downstream of, and adapted to receive compressed air, from the vessel 11 is a pressure regulator 12 which may be set to reduce the pressure of the stored air to a working level in the region of 10 bar. The regulator is controlled as to its output pressure by an electronically operated control system 13 in order to determine the output power of the system.

At the outlet of the pressure regulator 12 is a solenoid operated valve 14 which is of the type which is normally open and is electrically energised to a closed condition. The valve is held closed electrically while the supply of utility electricity is present and thus opens to supply the air from the regulator when the electrical supply fails. The stored air passing from the regulator 12 is fed via the solenoid valve 14 when opened, to a scroll expander 15. This device is in effect an oil-free scroll compressor reconfigured to operate as an expander. In operation, the compressed air at a pressure of 10 bar is passed through the expander where it expands to atmospheric pressure and where the action of expansion causes a shaft 15a of the scroll expander 15 to rotate.

The expanded air leaving the scroll expander 15 is dry, oil and contaminant-free, and at a temperature below 0°C. This chilled air is ideal in cooling the electronics of the system and air conditioning the room containing the electronics.

A scroll expander is a high efficiency machine when compared to more traditional reciprocating, vane or turbine expanders.

Mechanically connected to the shaft 15a of the expander 15 is an electro-magnetic generator 16 producing an electrical supply at, say, 48 volts DC. This may be stepped up or down as demanded by an appliance to which the back-up electrical power is to be supplied.

A power conditioning unit 17 controls the output power and also provides an electrical supply to the control unit 13. The unit 17 includes capacitors to store a small amount of electrical energy. These capacitors will be kept fully charged from the main utility electricity supply such that when the supply fails the capacitors will provide the back-up electrical supply until the scroll expander 15 and the generator 16 can produce the necessary electrical power, which may take one or more seconds to achieve. Therefore the system can offer a true uninterruptible power supply, not just back-up power.

In use, when the normal utility electrical supply is available the scroll expander system is not operational and the stand-by energy is stored in the vessel 11.

An uninterrupted power supply is required instantaneously when the utility supply fails.

Upon failure, and for an initial period while the scroll expander 15 and generator 16 reach operating speed and deliver the required power, the electricity supply is maintained from the capacitor energy store within the power conditioning unit 17.

Furthermore the unit 17 serves a second purpose to match the slow response from the expander 15 and generator 16 to fast changes in demanded load. For example, if it is assumed that the power output demand is changed, near instantaneously, from 300 watts to 600 watts, the system will take a finite time to react to the change in load, and during this period the capacitor energy store will make up the shortfall. Conversely, if the output demand is reduced instantaneously from 600 watts to 300 watts, once again the expander/generator will take a finite time to reach a reduced speed and output, during this period the capacitor energy store will absorb the excess energy delivered by the expander/ generator.

It will be appreciated that a system in accordance with the invention provides a truly uninterruptible electrical power supply while storing and releasing oil-free, clean and dry air which thus exits the expander 15 and can be used for air conditioning and cooling of electronic equipment, and does not rely on the use of fossil fuels or batteries. Both the compressor 10 and the expander 15 operate substantially oil-free so that contamination of the air is avoided.

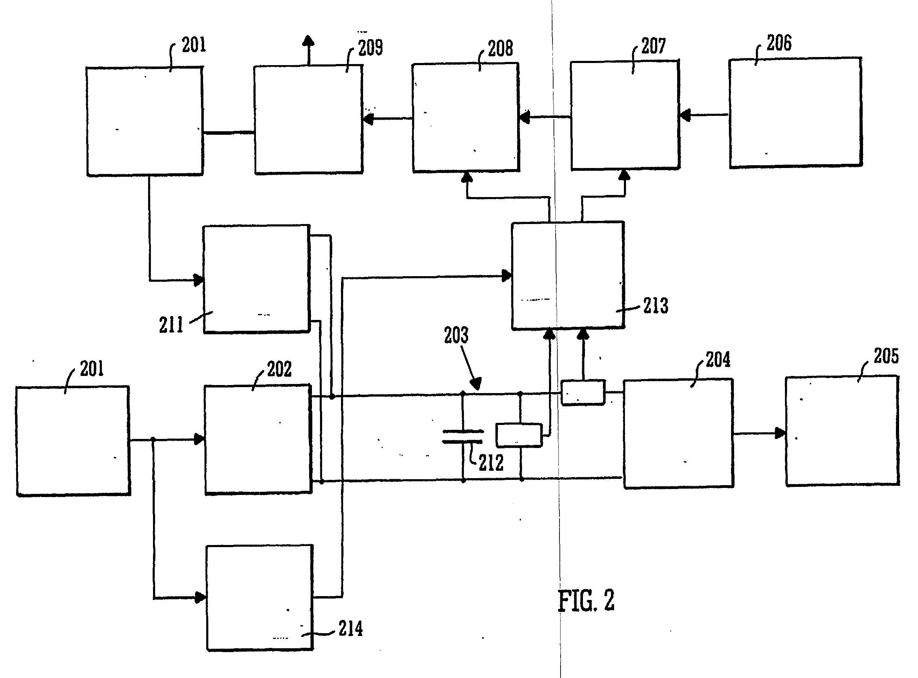

Referring now to Fig. 2 there is shown a second embodiment in which the flow of power through the system is further enhanced. The utility electrical supply is illustrated at 201 and consists of an AC power supply which is rectified with a rectifier 202 and then passed through a DC link to be converted in a power converter 204 to a form suitable for the required load.

The DC link comprises a capacitor energy store 212, a voltage measuring device VMD and a current measuring device CMD.

The DC power provided by power converter 204 may be, for example, 48 volts DC for telecommunications applications, but alternatively the power converter 204 could be provided in the form of a mains inverter to provide synthesised AC power for mains frequency and voltage loads.

At times when the utility power supply is interrupted the system will switch to operation from the pressurised air supply 206 equivalent to the air receiver 11 in Fig. 1. Energy is contained within the pressurised air which is allowed to flow through an air solenoid 207 and electronic air regulator 208. The regulator 208 acts as a throttle to regulate air flow to a scroll expander 209 where the air is expanded.

The scroll expander 209 mechanically drives an electrical alternator 210 to generate AC electrical power. This is converted to DC power by a second rectifier 211 whose output is connected to the DC link 203. The power thus flows through the DC link to the output power converter 204 to supply the load 205.

To allow sufficient time for the expander 209 to reach its critical operating speed, and to react to rapid changes in load demand, the capacitor energy store 212 is provided at the DC link.

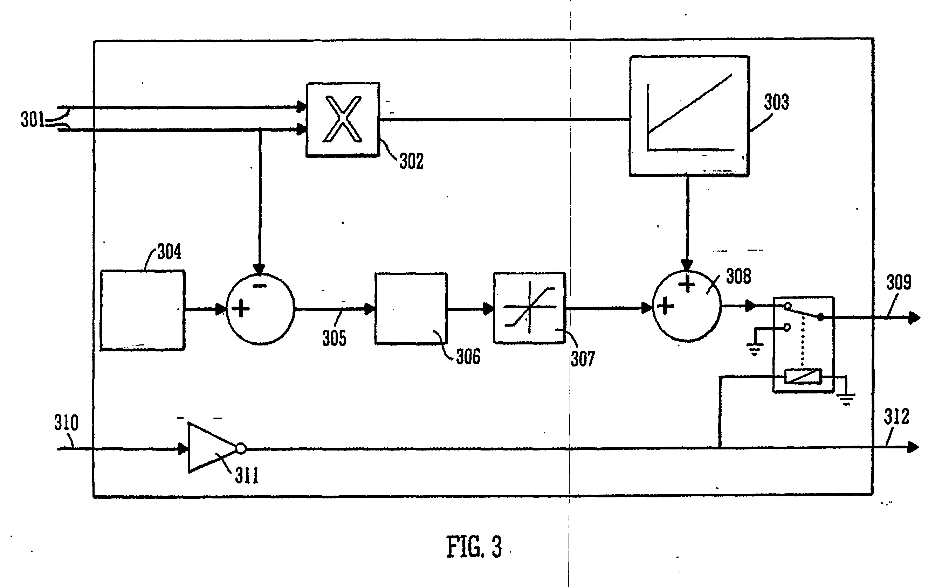

Management of power flow during air operation, i.e. when the utility supply is interrupted, is undertaken by an electronic controller 213. The control algorithms are illustrated in Fig. 3 where DC link voltage and current is continuously monitored at 301, and the demanded power is calculated by signal multiplication at 302. The controller contains a mathematical model 303 for the operation of the expander which can thus output the required air pressure for any load demand.

Simultaneously, the actual DC link voltage is compared with a set point DC link voltage at 304, and any error signal is produced at 305. This signal is passed through a proportional-integral-derivative (PID) controller 306 and a limiter 307 to provide a pressure adjustment signal.

Finally, the load demand derived pressure signal from model 303 is summed at 308 with the pressure adjustment signal before passing from the controller 213 as a set pressure signal 309 to set the electronic air pressure regulator 208 and air solenoid 207.

At all times, the controller 213 is monitoring the utility electricity supply at 201 via a mains-present relay 214. The mains-present signal at 310 passes through a signal inverter 311 and is used to control the air solenoid 207 and to gate the set pressure signal at 309. Thus, when the mains electricity supply is available the air solenoid 207 is "off" and the set pressure signal is blocked.

Currently available air expanders tend to under-expand the compressed air thus ejecting exhaust air which still contains significant energy at pressures above atmospheric pressure. The following is a description of a system for recovering the energy contained within this under-expanded air and therefore optimising the efficiency of the system.

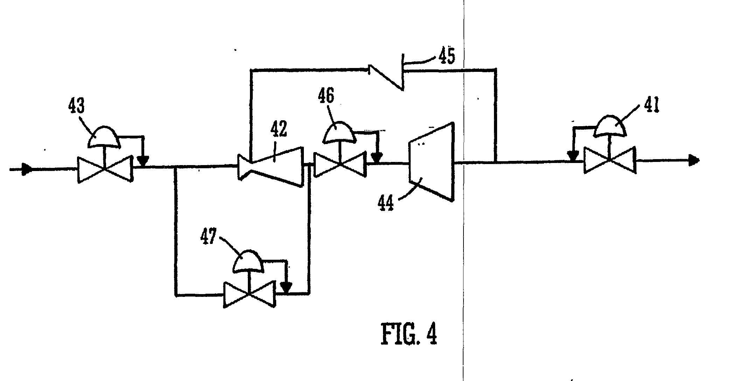

Air expanders have a compression ratio lower than the ratio of driving air pressure to atmospheric air pressure. As an example, the air expander 15, 209, may have a 3:1 expansion ratio. Such an expander may be required to be supplied with air at a pressure of 9 bar to deliver a required power output. In this case, the air will leave the expander at 3 bar still containing significant energy. Fig. 4 illustrates a system for recovering the energy from the pressurised exhaust air.

In the case of an expander with a low expansion ratio as discussed above, minimal power output is lost if the pressure at the outlet from the expander is held at a pressure above atmospheric pressure by use of a back pressure regulating valve. Such a valve is shown at 41 in Fig. 4. Since air is normally available at a much higher pressure than is required by the expander, the high pressure air can be used to increase the pressure of some of the air from the expander so as to reduce the quantity of air required to produce a given amount of power.

The high pressure air must first be reduced to a constant pressure suitable to drive the expander venturi 42, by a regulator 43. The air then passes into the venturi as the driving air and this entrains the lower pressure air from the outlet of the expander which may be at atmospheric pressure or at a higher pressure if the pressure relief valve 41 is included. Thus the low pressure outlet air passes through non-return valve 45 into the venturi 42. The combined air is exhausted at a pressure level between those of the driving air and the entrained air.

If the power requirement of the load is variable, a further pressure regulator 46 may be included to vary the pressure into the expander in response to a control signal. This regulator is equivalent to that shown at 208 in Fig. 2 and is operated from the electronic control system 213.

A further valve 47 may be introduced either as a regulator to ensure sufficient air supply at times of high demand or as a solenoid valve which opens when the pressure from the high pressure air source falls below a level sufficient to drive the venturi 42.

Typical operating pressures are shown in Fig. 4 against each valve/regulator. At such pressures about 25% of the flow through the expander 44 will be removed via the venturi and passed through the expander again.

A system for generating back-up electrical power as described herein, and in accordance with the invention, may be utilised with remote filling capability. That is, highly compressed air may be provided in reservoirs which are installed, pre-loaded at a remote location such as a remote telecommunications terminal which conventionally contains batteries for providing back-up power. Thus, in a remote terminal cabinet a power generating system as described herein may be housed to become operational when required i.e. when the utility power supply fails. The compressed air-driven back-up power system therefore comes into play when required, and the system occupies considerably less space than a bank of back-up batteries. The tanks or reservoirs containing the compressed air may be large and sited either below or above ground or within a separate enclosure where they may be readily exchanged when required and thus do not need to occupy space within the normal remote terminal cabinet.

It is not intended to limit the invention to the above examples only. For example, the vessel 11 may contain a gas other than air such as might be evolved from an industrial process. Furthermore, several such vessels may be connected in tandem thus to increase the workable life of the system in the event of utility electrical supply failures occurring frequently during a short period.

## Claims

1. A system for generating back-up electrical power, comprising a vessel adapted to contain a volume of compressed gas, a valve to release gas from the vessel at a predetermined pressure, an expander adapted to receive and pass said released gas and having a rotary member to be rotated by the flow of said released gas passed by the expander, and an electrical generator drivingly connected to the rotary member of the expander thus to generate a supply of electrical power; **characterised in that** the expander is a scroll expander.

2. A system according to claim 1, including a pressure regulator to reduce the pressure of the gas released from the vessel to a working pressure at which the gas is introduced into the scroll expander.

3. A system according to claim 1 or claim 2, including a multi-stage air compressor and dryer connected to the vessel for supply thereto of compressed and dried gas.

4. A system according to any preceding claim, wherein the vessel retains gas at a pressure at or in the region of 300 bar and at or in the region of due point of -30°C.

5. A system according to claim 3, wherein the multi-stage air compressor is adapted to be driven from the utility electrical supply.

6. A system according to claim 2, wherein the pressure regulator and the gas release valve are connected to an electrically operated control system.

7. A system according to claim 2, wherein the gas release valve is of the type which is normally open and is electrically energised to a closed condition, the valve, in use, being maintained closed electrically while the utility electrical supply is present and thus opening to supply gas from the regulator when the utility electrical supply fails.

8. A system according to any preceding claim, wherein the scroll expander is an oil free scroll compressor reconfigured to operate as an expander.

9. A system according to any preceding claim, wherein the scroll expander releases gas such that it may expand to atmospheric pressure at a temperature below that of ambient air.

10. A system according to claim 1, including a power conditioning unit having at least one capacitor to store electrical energy thus to provide a back-up electrical supply for a brief period until the scroll expander and generator can produce the required supply of electrical power, the capacitor serving also to release or absorb electrical power in the event of a change in power demand.

11. A system according to claim 10, wherein the power conditioning unit includes a DC link which comprises a capacitor energy store, a voltage measuring device and a current measuring device.

12. A system according to any preceding claim, including means to recycle a portion of gas released from the output of the expander to be entrained with gas supplied to the expander from the vessel.

13. A system according to any preceding claim, including a plurality of vessels each adapted to contain a volume of compressed gas, the vessels being connected together in tandem.

14. A system according to any preceding claim, including a regulator to throttle the flow of the gas introduced into the scroll expander to a pressure/flow rate which is determined according to the level of electrical back-up power demanded by a load for which the back-up electrical power is generated.

15. A system according to claim 14, wherein the regulator is controlled by an electrically operated control system using inputs of measured voltage and current.

16. In combination, a system according to claim 10, and a load having a variable power requirement connected to the system thus to provide an uninterrupted supply of electrical power to the load.

## Patentansprüche

1. System zum Erzeugen von elektrischer Pufferenergie, mit einem Behälter, der dafür ausgebildet ist, ein Volumen an Druckgas aufzunehmen, einem Ventil zum Freisetzen von Gas aus dem Behälter bei einem vorbestimmten Druck, einem Expander, der dafür ausgebildet ist, freigesetztes Gas zu empfangen und weiterzuleiten und ein drehbares Teil hat, das durch den Strom des freigesetzten Gases, das durch den Expander geleitet wird, in Drehung versetzbar ist, und mit einem elektrischen Generator, der mit dem drehbaren Teil des Expanders in Antriebsverbindung steht, um so einen Vorrat an elektrischer Energie zu erzeugen, **dadurch gekennzeichnet, dass** der Expander ein Spiralexpander ist.

2. System nach Anspruch 1, mit einem Druckregler zum Reduzieren des Druckes des Gases, das aus dem Behälter freigesetzt wird, auf einen Arbeitsdruck, bei welchem das Gas in den Spiralexpander eingeleitet wird.

3. System nach Anspruch 1 oder 2, mit einem mehrstufigen Luftverdichter und -trockner, der mit dem Behälter verbunden ist, um diesen mit verdichtetem und getrocknetem Gas zu versorgen.

4. System nach einem der vorhergehenden Ansprüche, wobei der Behälter das Gas auf einem Druck von oder in dem Bereich von 300 Bar und auf einem Taupunkt oder in dem Bereich eines Taupunkts von -30 °C hält.

5. System nach Anspruch 3, wobei der mehrstufige Verdichter dafür ausgebildet ist, aus der elektrischen Energieversorgung gespeist zu werden.

6. System nach Anspruch 2, wobei der Druckregler und das Gasfreisetzventil mit einem elektrisch betriebenen Steuersystem verbunden sind.

7. System nach Anspruch 2, wobei das Gasfreisetzventil von dem Typ ist, der normalerweise offen ist und durch Versorgung mit elektrischer Energie in einen Schließzustand gebracht wird, wobei das Ventil im Gebrauch elektrisch geschlossen gehalten wird, während die elektrische Energieversorgung vorhanden ist, und somit öffnet, um Gas aus dem Regler zu liefern, wenn die elektrische Energieversorgung ausfällt.

8. System nach einem der vorhergehenden Ansprüche, wobei der Spiralexpander ein ölfreier Spiralverdichter ist, der umgestaltet worden ist, um als ein Expander arbeiten zu können.

9. System nach einem der vorhergehenden Ansprüche, wobei der Spiralexpander Gas freisetzt, so dass es sich bei einer Temperatur unterhalb der Umgebungstemperatur auf Atmosphärendruck ausdehnen kann.

10. System nach Anspruch 1, mit einer Energiekonditioniereinheit, die wenigstens einen Kondensator hat zum Speichern von elektrischer Energie, um so eine elektrische Pufferstromversorgung für eine kurze Zeitspanne zu bilden, bis der Spiralexpander und der Generator die verlangte Zufuhr an elektrischer Energie herstellen können, wobei der Kondensator auch zum Freisetzen und zum Absorbieren von elektrischer Energie in dem Fall einer Änderung im Energiebedarf dienen kann.

11. System nach Anspruch 10, wobei die Leistungskonditioniereinheit ein Gleichstromverbindungsglied aufweist, das einen Kondensatorenergiespeicher umfasst, eine Spannungsmessvorrichtung und eine Strommessvorrichtung.

12. System nach einem der vorhergehenden Ansprüche, mit einer Einrichtung zum Recycling eines Teils des freigesetzten Gases aus dem Ausgang des Expanders, um es durch Gas mitzunehmen, das dem Expander aus dem Behälter geliefert wird.

13. System nach einem der vorhergehenden Ansprüche, mit mehreren Behältern, von denen jeder davon ausgebildet ist, ein Volumen an Druckgas aufzunehmen, wobei die Behälter in Tandem miteinander verbunden sind.

14. System nach einem der vorhergehenden Ansprüche, mit einem Regler zum Drosseln des Stroms des Gases, das in den Spiralexpander eingeleitet wird, auf einen Druck/Durchsatz, der gemäß dem Wert der elektrischen Pufferenergie bestimmt wird, die durch eine Last verlangt wird, für die die elektrische Pufferenergie erzeugt wird.

15. System nach Anspruch 14, wobei der Regler durch ein elektrisch betriebenes Steuersystem gesteuert wird, das als Eingangssignal eine gemessene Spannung und einen gemessenen Strom verwendet.

16. In Kombination ein System nach Anspruch 10 und eine Last, die einen variablen Energiebedarf hat und mit dem System verbunden ist, um so eine ununterbrochene Zufuhr an elektrischer Energie zu der Last bereitzustellen.

## Revendications

1. Système pour générer de l'énergie électrique de secours, comprenant une cuve adaptée à contenir un volume de gaz comprimé, une soupape pour dégazer depuis la cuve à une pression prédéterminée, et un détendeur adapté à recevoir et à faire passer ledit gaz libéré et comportant un élément rotatif destiné à être mis en rotation par l'écoulement dudit gaz libéré passant à travers le détendeur, et un générateur électrique connecté de manière commandée à l'élément rotatif du détendeur pour générer ainsi une alimentation de puissance électrique ; **caractérisé en ce que** le détendeur est un détendeur à spirale.

2. Système selon la revendication 1, comportant un régulateur de pression pour réduire la pression du gaz libéré depuis la cuve à une pression de travail à laquelle le gaz est introduit à l'intérieur du détendeur à spirale.

3. Système selon la revendication 1 ou 2, comportant un compresseur d'air multi-étages et un déshydrateur connecté à la cuve pour alimenter celle-ci en gaz comprimé et séché.

4. Système selon l'une quelconque des revendications précédentes, dans lequel la cuve retient du gaz à une pression de ou autour de 300 bars et à un point critique de ou autour de -30°C.

5. Système selon la revendication 3, dans lequel le compresseur à air multi-étages est adapté pour être commandé par l'alimentation électrique générale.

6. Système selon la revendication 2, dans lequel le régulateur de pression et la soupape de dégazage sont connectés à un système de commande actionné électriquement.

7. Système selon la revendication 2, dans lequel la soupape de dégazage est du type qui est normalement ouvert et est assisté électriquement vers une condition fermée, la soupape, en utilisation, étant maintenue fermée électriquement pendant que l'alimentation électrique générale est présente et donc ouvre pour alimenter du gaz depuis le régulateur quand l'alimentation électrique générale tombe en panne.

8. Système selon l'une quelconque des revendications précédentes, dans lequel le détendeur à spirale est un compresseur sans graissage à spirale reconfiguré pour opérer comme un détendeur.

9. Système selon l'une quelconque des revendications précédentes, dans lequel le détendeur à spirale libère du gaz de sorte qu'il peut se dilater à la pression atmosphérique à une température inférieure à celle de l'air ambiant.

10. Système selon la revendication 1, incluant une unité de conditionnement de l'énergie ayant au moins un condensateur pour stocker de l'énergie électrique pour fournir ainsi une alimentation électrique de secours pendant une brève période jusqu'à ce que le détendeur à spirale et le générateur puissent produire l'alimentation requise en énergie électrique, le condensateur servant aussi à libérer ou absorber de l'énergie électrique en cas de changement dans la demande d'énergie.

11. Système selon la revendication 10, dans lequel l'unité de conditionnement de l'énergie comporte une liaison à courant continu qui comprend un condensateur de stockage d'énergie, un dispositif de mesure de la tension et un dispositif de mesure du courant.

12. Système selon l'une quelconque des revendications précédentes, comportant des moyens pour recycler une partie du gaz libéré depuis la sortie du détendeur pour être entraînée avec du gaz alimenté au détendeur depuis la cuve.

13. Système selon l'une quelconque des revendications précédentes, comportant une pluralité de cuves chacune adaptée à contenir un volume de gaz comprimé, les cuves étant connectées ensemble en tandem.

14. Système selon l'une quelconque des revendications précédentes, comportant un régulateur pour régler l'écoulement de gaz introduit à l'intérieur du détendeur à spirale à un rapport pression/débit qui est déterminé(e) selon le niveau d'énergie électrique de secours demandé par une charge pour laquelle de l'énergie électrique de secours est générée.

15. Système selon la revendication 14, dans lequel le régulateur est commandé par un système de commande actionné électriquement utilisant des entrées de tension et courant mesurées.

16. En combinaison, un système selon la revendication 10, et une charge ayant des besoins en énergie variable connectée au système pour fournir ainsi une alimentation ininterrompue en énergie électrique à la charge.
